# EUROPÄISCHE PATENTANMELDUNG

(11) **EP 4 597 387 A1**
(43) Veröffentlichungstag der Anmeldung: **06.08.2025**
(21) Anmeldenummer: 24155737.0
(22) Anmeldetag: 05.02.2024
(51) Int. Cl.: G06Q 10/0832, G06Q 10/0833, G06Q 10/087

(54) **ANORDNUNG UND VERFAHREN ZUR LAGERUNG VON PRODUKTEN**

(71) Anmelder: Oberbauer-Ott, Christiane, 01445 Radebeul (DE)
(72) Erfinder: Oberbauer-Ott, Christiane, 01445 Radebeul (DE)
(74) Vertreter: Kailuweit & Uhlemann Patentanwälte Partnerschaft mbB

(57) **Zusammenfassung**

Gegenstand der vorliegenden Erfindung sind ein Verfahren und eine Anordnung zur Lagerung von Produkten außerhalb der Lagerorte des Eigentümers der Produkte. Die Anordnung weist dabei eine Platine auf, die mit einer Umreifung verbunden ist, die das Produkt einschließtbzw. eine Platine, die direkt an einem Produkt angeordnet ist Bei Entnahme des Produktes wird die Umreifung geöffnet. Sowohl autorisierte als auch unautorisierte Entnahme des Produktes aus der Umreifung werden über ein Funkmodul an eine Datenverarbeitungseinrichtung gemeldet, die entsprechende vordefinierte Funktionen ausführt bzw. initiiert. Analog wird bei der Entfernung der Platine von dem Produkt verfahren.

## Beschreibung

Gegenstand der vorliegenden Erfindung sind ein Verfahren und eine Anordnung zur Lagerung von Produkten außerhalb der Lagerorte des Eigentümers der Produkte. Insbesondere erfolgt ein Eigentumsübergang vom Eigentümer auf den Nutzer erst im Moment der Entnahme des Produktes aus einer Umreifung oder bei der Verwendung des Produktes.

Die DE 601 13 234 T2 (EP 1 255 906 B1) offenbart eine Vorrichtung zum sicheren Transport eines Gegenstandes. Die Vorrichtung umfasst Mittel zum Enthalten eines zu transportierenden Gegenstandes (Behälters) und Schließmittel zum Verschließen der Mittel zum Enthalten eines Gegenstandes oder des Behälters. Weiterhin vorgesehen sind Kommunikationsmittel zum Verbinden der Mittel zum Enthalten eines Gegenstandes oder des Behälters mit einem Kommunikationsnetzwerk und zum Senden über das Kommunikationsnetzwerk von einem Signal, das einen Zustand des Mittels zum Enthalten des Gegenstandes oder Behälters betrifft, sowie Empfangsmittel zum Empfang eines Öffnungssignals der Mittel zum Schließen der Mittel zum Enthalten des Gegenstandes.

In der CN 107403294 A wird ein Verfahren für den Transport von Gütern beschrieben. Mindestens eine Box mit einer ersten vorgegebenen Größe wird in einer zweiten Box einer zweiten vorbestimmten Größe angeordnet. Die ersten Logistikboxen werden zu einem entsprechenden Zielort durch direktes Transportieren bewegt. Die zweite Box ist mit einem Mittel zur Überwachung des Zustands des Produkts verbunden, dass bei einer (mechanischen) Veränderung des Gehäuses (Öffnung oder Zerstörung) die (mechanische) Veränderung registriert, wobei das Mittel und die (mechanische) Veränderung an einen Empfänger übermittelt.

Es stellt sich die Aufgabe, eine Anordnung und ein Verfahren zur Nutzung der genannten Anordnung vorzuschlagen, die es ermöglichen, Produkte in Lagerbereichen des Kunden zu lagern, wobei die Produkte bis zum Zugriff des Kunden auf diese Produkte Eigentum des Verkäufers bleiben und der Zugriff auf die Produkte in kostengünstiger Weise beim Eigentümer registriert und weiterverarbeitet wird. Aufgrund der sich häufig ändernden Daten zu einem Produkt (Bezeichnung, kundenspezifische Schlüsselnummern, Preise) sollen diese Daten möglichst schon bei Ankunft des Produktes an einem Lagerort aktuell sein bzw. dort aktualisierbar sein.

Erfindungsgemäß wird die Aufgabe mit einer Anordnung und einem Verfahren gemäß den unabhängigen Ansprüchen gelöst. Vorteilhafte Ausgestaltungen der Vorrichtung bzw. des Verfahrens sind in den rückbezogenen Unteransprüchen beschrieben.

Anordnung zur Verfolgung und Überwachung von einem oder mehreren Produkten, mindestens aufweisend:
- eine Datenverarbeitungseinrichtung mit einer Sende-/Empfangsvorrichtung für Messwerte und weitere elektronische Informationen,
- mindestens einer Platine, mindestens aufweisend ein Funkmodul, Geopositions-Modul, Speichermodul und Energieversorgung,
- mindestens eine optisch erfassbare Identifizierungsmöglichkeit,
   wobei
- die Platine dazu eingerichtet ist,
   ∘ den aktuellen Standort der Produkte mittels des Geopositions-Moduls als Messwert festzustellen,
   ∘ das mechanische Entfernen der Platine von einem Produkt oder von einer Umreifung eines oder mehrerer Produkte oder aber die Öffnung der Umreifung als Messwert zu detektieren,
   ∘ einen oder mehrere Messwerte zu speichern,
   ∘ einen oder mehrere Messwerte an die Datenverarbeitungseinrichtung zu übermitteln,
   ∘ gemeinsam mit den Messwerten mindestens einen Identifikatorwert zu übermitteln, der die Platine eindeutig kennzeichnet,
   ∘ Daten zu dem Produkt oder den Produkten zu speichern,
   ∘ Änderungen der Daten zu dem Produkt bzw. den Produkten vor der Anordnung der Platine an dem Produkt bzw. der Umreifung der Produkte an einem ersten Standort und während des Transportes des Produkts bzw. der Produkte zu einem zweiten oder weiteren Standorten, sowie an dem zweiten bzw. weiteren Standorten zu empfangen und abzuspeichern,
- die Datenverarbeitungseinrichtung dazu eingerichtet ist, vor und/oder während und/oder nach der Anordnung der Platine an den Produkten bzw. der Umreifung der Produkte an dem ersten Standort
   ∘ Daten zu den Produkten an die Platine zu übermitteln,
   ∘ Daten zu den Produkten an die optisch erfassbare Identifizierungsmöglichkeit zu übermitteln oder die optische Identifizierungsmöglichkeit mit den Daten zu den Produkten bereitzustellen,
   ∘ während des Transportes vom ersten Standort zu dem zweiten oder weiteren Standorten sowie an diesen weiteren Standorten Änderungen der Daten zu den Produkten an die Platine zu übermitteln,
   ∘ die Messwerte der Platine zu empfangen und zu verarbeiten,
   ∘ aufgrund der Messwerte beim Entfernen der Platine von dem Produkt bzw. der Umreifung oder der Öffnung bzw. Zerstörung der Umreifung oder aufgrund von Messwerten der Platine Informationen an den ersten und/oder den zweiten und/oder weiteren Standorten und/oder an die Platine zu senden.

Bei der Datenverarbeitungseinrichtung kann es sich um einen Personalcomputer handeln, der als Sende-Empfangsvorrichtung bspw. ein Mobilfunkmodul aufweist oder mit einem solchen verbunden ist. Selbstverständlich sind auch andere Datenverarbeitungseinrichtungen geeignet (bspw. Abteilungsrechner, Großrechner) Weiterhin ist es möglich, dass die Datenverarbeitungseinrichtung über ein Netzwerk (drahtlos oder drahrgebunden), bspw. das Internet, Signale empfängt, die an anderer Stelle von der Platine in dieses Netzwerk eingespeist wurden. Selbstverständlich sind auch andere Datenverarbeitungseinrichtungen aus dem Stand der Technik geeignet.

Die Platine ist hier ein Synonym für eine aus einem oder mehreren elektronischen Modulen aufgebaute elektronische Schaltung. Diese elektronische Schaltung kann neben Funkmodul, Geopositions-Modul, Speichermodul und Energieversorgung auch ein frei programmierbares Datenerarbeitungsmodul, bspw. einen Mikrocontroller, aufweisen. Bei dem Geopositions-Modul handelt es sich um ein Modul aus dem Stand der Technik zur Bestimmung der geographischen Lage mittels Geopositionssystemen wie GPS, GLONASS, Galileo oder Beidou. Der Mikrocontroller ist dazu ausgelegt, die Programmsteuerung der weiteren elektronischen Komponenten der Platine auszuführen. Insbesondere gehört dazu die Verarbeitung von an der Umreifung bzw. den Produkten angeordneten Sensoren auszuführen. Das Speichermodul der Platine ist insbesondere dazu eingerichtet, Daten zu dem Produkt bzw. den Produkten zu speichern. Derartige Daten können bspw. Produktbezeichnungen, Schlüsselnummern, Chargennummern, Herstellungsdaten, Preise, etc. sein. Möglich ist es jedoch auch, bereits Daten zu hinterlegen, die erst an einem zweiten Standort, üblicherweise dem Lagerort der Produkte, bedeutsam sind. Dies können bspw. betriebsinterne Bezeichnungen des Endverbrauchers, Einzelabgabepreise etc. sein. Das Speichermodul kann dabei statische Daten (bspw. Produktbezeichnung des Herstellers) und veränderliche Daten, bspw. Endabgabepreise, Bezeichnungen des Endverbrauchers etc. enthalten. Statische und veränderliche Daten können von der Datenverarbeitungseinrichtung in die Platine übertragen und dort gespeichert werden. Eine Änderung der veränderlichen Daten kann an dem ersten Standort, während des Transportes vom ersten Standort zu einem zweiten Standort und am zweiten Standort erfolgen. D. h., dass die veränderlichen Daten an jedem Standort bzw. auf dem Transport zwischen Standorten jederzeit, auch einzeln, geändert werden können. Dazu kann die Datenverarbeitungseinrichtung diese Daten an die Platine bspw. per Mobilfunk oder sonstiger drahtloser Datenübermittlung, bzw. am ersten oder eventuell auch am zweiten Standort auch drahtgebunden, übertragen.

Die Platine weist weitere elektronische Komponenten nach dem Stand der Technik auf, die das Zusammenwirken der genannten Komponenten ermöglichen. Vorhandensein können dabei insbesondere einfache Steuermodule, die lediglich einen oder wenige (bspw. bis zu zehn) vorgegebene Steuerungsabläufe auf vordefinierte Messwerte ausführen. Diese Steuerungsmodule sind nicht in Komplexität eines Mikrocontrollers programmierbar.

Die Umreifung kann aus einem Gurtsystem, einem Netz, einem Beutel, einem Karton, einer Kiste, einem Container oder einer sonstigen Umhüllung bestehen, die geeignet ist, das eine oder die mehreren Produkte aufzunehmen und eine Entnahme ohne autorisierte Öffnung oder ohne Zerstörung der Umhüllung zu verhindern bzw. zu erschweren. Die Umreifung kann in die sonstige Verpackung bzw. Transportsicherung der Produkte integriert sein.

Die Umreifung kann aber auch zusätzlich zu der sonstigen Verpackung bzw. Transportsicherung ausgeführt sein. So kann bspw. neben der zur Transportsicherung ausgeführten Verpackung mit Umreifungsbändern eine zusätzliche Umreifung der erfindungsgemäßen Anordnung vorgesehen sein, die der Überwachung der Produkte dient.

In Ausführungsformen der Erfindung umschließt die Umreifung auch lediglich einen Öffnungs- oder Betätigungsmechanismus eines Behältnisses und verhindert bzw. behindert so eine unautorisierte Entnahme aus diesem Behältnis. So kann die Umreifung bspw. den Öffnungsmechanismus eines Containers blockieren oder das Öffnen eines Schaltkastens mit Bedienelementen verhindern.

In einer Ausführungsform ist die Platine direkt an einem Produkt angeordnet und dazu eingerichtet, das Entfernen der Platine von diesem Produkt als Messwert zu erkennen. Genutzt werden kann dies bspw., indem die Platine an einem Bauteil derart angeordnet ist, dass eine Verwendung des Bauteils zwangsläufig das Entfernen der Platine erfordert. Derartiges kann erreicht werden, indem die Platine am Produkt eine Montage- oder Befestigungsöffnung verdeckt oder in einer solchen angeordnet ist. Erst ein Entfernen der Platine ermöglicht dann die Verwendung.

Unter "unautorisierter Öffnung" wird im vorliegenden Zusammenhang ein Öffnen bzw. Entfernen der Platine unter Umgehung der vorgesehenen Öffnungsmethode verstanden. So ist bspw. das Aufbrechen eines Schlosses an dem Gehäuse oder der Umreifung als unautorisiert zu verstehen. Auch das elektronische bzw. datentechnische ("Hacken") Eindringen in die Platine oder ähnliche Vorgehensweisen werden unter "unautorisiertem Öffnen" subsummiert, unabhängig davon, ob das unautorisierte Öffnen durch den Inhaber oder Eigentümer des Lagerortes erfolgt oder durch Dritte. In jedem Falle wird das Öffnen der Umhüllung, gleichgültig, ob autorisiert oder unautorisiert als Messwert registriert. Ebenso wird das Entfernen der Platine von der Umhüllung oder, falls diese Ausführungsform vorliegt, von dem Produkt, als Messwert registriert. Die Unterscheidung zwischen autorisierter und unautorisierter Öffnung bzw. Entfernung sowie die Generierung entsprechender unterscheidbarer Messwerte für autorisiertes und unautorisiertes Öffnen ist lediglich optional vorgesehen.

Die Umhüllung ist in Ausführungsformen der Erfindung dazu eingerichtet, nicht nur autorisiert geöffnet, sondern auch wieder verschlossen zu werden. Optional können dabei Art und Anzahl der entnommenen Produkte ermittelt und abgespeichert werden. Dies erfolgt bspw. mittels geeigneter Funkmodule (RFID, NFC, ...) in den Produkten und zugehörigen Empfängern auf der Platine.

Vorzugsweise ist die Platine in einem Gehäuse untergebracht Das Gehäuse kann nicht ohne weiteres unautorisiert zerstörungsfrei geöffnet werden. Der Versuch des unautorisierten Öffnens des Gehäuses wird optional als Messwert detektiert. Das Gehäuse kann dabei als mittels eines mechanischen oder elektronischen Schlosses zu öffnende Box ausgeführt sein. Vorzugsweise weist das Gehäuse eine mechanische und/oder elektrische Anbindung an die Umreifung auf. Durch diese Anbindung kann der Zustand der Umreifung durch die Platine erfasst und überwacht werden. Dies kann bspw. realisiert werden, indem in die Umreifung leitfähige Drähte oder Fasern eingearbeitet sind, deren Zerstörung einen Stromfluss unterbricht. Eine weitere Möglichkeit zur Detektion der Öffnung kann über die Umreifung erfolgen, indem deren nachlassende mechanische Spannung von der Platine registriert wird. Weitere alternative Detektionsmöglichkeiten sind denkbar.

Die Platine weist einen Identifikatorwert auf, der vorzugsweise in die Platine einprogrammiert ist. Dieser Identifikatorwert kennzeichnet die Platine eindeutig. Er kann bereits mit der Platine bei deren Herstellung (oder nachfolgend fest und unveränderlich in diese einprogrammiert sein. Eine alternative Vorgehensweise sieht vor, diesen Identifikatorwert später in die Platine einzuprogrammieren. Bevorzugt kann der zu verwendende Identifikatorwert dazu durch die Datenverarbeitungseinrichtung generiert und optional auch an die Platine übertragen und in dieser gespeichert werden.

Weiterhin weist das Gehäuse in einer Ausführungsform ein mit der Platine verbundenes Anzeige- und/oder Bedienfeld auf, über das Informationen von der Platine abgefragt bzw. in diese eingegeben werden können. Optional weist die Platine auch einen Kartenleser, einen USB-Anschluss oder eine sonstige Schnittstelle auf, über die Informationen von der Platine abgefragt bzw. in diese eingegeben werden können

Die optisch erfassbare Identifizierungsmöglichkeit ist bspw. ein Etikett, Aufkleber oder Anhänger, der mindestens Angaben über Art und Anzahl der in der Umreifung enthaltenen Produkte in menschenlesbarer Form aufweist. Optional ist die Identifizierungsmögichkeit ein Display, dass auf Abruf (bspw. durch Knopfdruck) oder permanent (bspw. per e-Paper-Display) Angaben über Art und Anzahl der in der Umreifung enthaltenen Produkte in menschenlesbarer Form anzeigt. In diesem Fall ist das Display vorzugsweise mit der Platine verbunden, in deren Speicher die genannten Informationen abgelegt sind. Die Datenverarbeitungseinrichtung ist dazu eingerichtet, die optisch erfassbare Identifizierungsmöglichkeit zu erstellen (wenn diese in statischer Form vorliegt, bspw. als Aufklebe-Etikett) bzw. diese mittels der Platine anzusteuern, so dass vorgegebene Werte bzw. Angaben angezeigt werden (falls die optisch erfassbare Identifizierungsmöglichkeit ein Display, bspw. ein e-Paper-Display ist). Für den Fall, dass die optisch erfassbare Identifizierungsmöglichkeit ein Display ist, kann die Platine die auf diesem anzuzeigenden Werte am ersten Standort, während des Transportes zum zweiten Standort bzw. an dem zweiten Standort verändern. Dies erfolgt aufgrund der Übermittlung entsprechender Daten und Befehle von der Datenverarbeitungseinrichtung.

Der erste Standort ist der Standort, an dem die Anordnung der Platine an dem Produkt bzw. der Umreifung der Produkte erfolgt. In der Regel handelt es sich dabei auch um den Standort, an dem die Programmierung der Platine bzw. die Datenübertragung an diese erfolgt.

Der Fachmann versteht, dass unter "zweiter Standort" ein einzelner Standort oder aber weitere Standorte, zu dem das Produkt bzw. die Produkte, ggf. auch etappenweise, weitertransportiert werden, zu verstehen ist.

In Ausführungsformen der Erfindung weist die Aufbewahrungsvorrichtung mindestens einen Sensor auf, der Messwerte an die Platine übermittelt. Bei den Messwerten handelt es sich bevorzugt um mindestens einen der folgenden Werte: Temperatur, Feuchtigkeit und/oder Beschleunigung. Die Auswahl der Sensoren ist insbesondere auf die Art der in der Umreifung gelagerten Produkte abgestimmt. Insbesondere sollen die Produkte schädigende Einflüsse erfasst werden. So sind vorzugsweise bei zerbrechlichen Produkten Beschleunigungssensoren, bei verderblichen Produkten Temperatursensoren und bei feuchteempfindlichen Produkten Feuchtesensoren vorgesehen.

Die Datenverarbeitungseinrichtung ist optional weiterhin dazu eingerichtet, Änderungen von Grenzwerten der durch Sensoren und/oder das Geopositionsmodul und/oder einen Zeitgeber der Platine bereitgestellten Messwerte an die Platine zu übermitteln. Dies ermöglicht bspw. für Geopositionsdaten ein Geofencing zu realisieren. Beim Überschreiten einer vorgegebenen Position kann dann bspw. die Übermittlung von Daten, wie bspw. Rechnungsdaten, durch die Datenverarbeitungseinrichtung an einen Endabnehmer erfolgen.

Die Platine ist in Ausführungsformen der Erfindung dazu eingerichtet die Messwerte bei Änderungen des Zustandes der Messwerte oder auf Abruf oder zeitbasiert an die Datenverarbeitungseinrichtung zu übermitteln. Der Art, Umfang und die zeitliche Abfolge der Übermittlung der Messwerte können in die Platine einprogrammiert sein.

Vorzugsweise erfolgt die Übermittlung der Messwerte mittels des Funkmoduls der Platine. Dazu kann das Funkmodul ein W-LAN-Modul, ein Mobilfunkmodul, ein Bluetoothmodul und/oder ein ZigBee-Modul umfassen. Selbstverständlich können auch Funkmodule anderer geeigneter Standards vorhanden sein. Die Datenverarbeitungseinrichtung ist dazu eingerichtet, aufgrund der Messwerte beim Entfernen der Platine von dem Produkt bzw. der Umreifung oder der Öffnung bzw. Zerstörung der Umreifung oder aufgrund von Messwerten der Platine Informationen an den ersten und/oder den zweiten und/oder weiteren Standorten und/oder an die Platine zu senden. Diese gesendeten Daten können bspw. Alarmmeldungen, Änderung von Verfallsangaben, Rechnungsdaten etc. umfassen.

Optional weisen die Umreifung und/oder die optisch erfassbare Identifizierungsmöglichkeit mindestens Informationen über den Hersteller des einen oder der mehreren Produkte, Warnhinweise bezüglich des einen oder der mehreren Produkte und/oder Warnhinweise bezüglich der Zerstörung der Umreifung auf. Die entsprechenden Angaben können weiterhin auch in dem Speichermodul der Platine enthalten sein, die diese über das Display anzeigt. Die Anzeige kann auf Abruf oder auch automatisch erfolgen, bspw. wenn der Versuch einer unautorisierten Öffnung als Messwert erfasst wird (dann insbesondere Warnhinweise). Optional sind die Angaben auch noch einmal in maschinenlesbarer Form (bspw. Strichcode) auf der Umreifung und/oder der optisch erfassbaren Identifizierungsmöglichkeit angeordnet.

In Ausführungsformen der Erfindung weist die Platine weiterhin ein RFID-Modul auf, dass dazu eingerichtet ist, maschinenlesbare Informationen zu dem einen oder mehreren Produkten in der Aufbewahrungsvorrichtung zu übermitteln bzw. von diesen zu empfangen. Optional kann alternativ oder zusätzlich auch ein NFC-Modul vorgesehen sein, dass die entsprechenden Informationen übermittelt.

Weiterhin kann das RFID-Modul (ebenso ein optionales NFC-Modul) weiterhin dazu eingerichtet sein, Messwerte und/oder die Überschreitung der vordefinierten Grenzwerte von Messwerten zu übermitteln.

Optional ist die Aufbewahrungsvorrichtung weiterhin dazu eingerichtet, dass an ihrem Standort weitere Daten in die Platine einprogrammiert werden, die dann am Standort optional maschinenlesbar abgefragt werden können. Diese Daten können bspw. Angaben über die öffnende Person enthalten.

In Ausführungsformen der Erfindung weisen die Produkte in der Aufbewahrungsvorrichtung funkabfragbare Tags (RFID-Tags, NFC-Module,.. ) auf, auf deren Grundlage die Platine mindestens die Anzahl der in der Aufbewahrungsvorrichtung vorhandenen Produkte als Messwert erfassen kann.

Optional ist die Datenverarbeitungseinrichtung weiterhin dazu eingerichtet, Informationen zu dem Produkt bzw. den Produkten von der Platine abzurufen und an ein Display, ein Tablet, ein Smartphone oder eine sonstige tragbare Datenverarbeitungseinrichtung zu übermitteln. Eine Ausführungsform der Platine sieht vor, dass Informationen zu dem Produkt bzw. den Produkten von der Platine direkt an ein Display, ein Tablet, ein Smartphone oder eine sonstige tragbare Datenverarbeitungseinrichtung übermittelt werden. Die übermittelten Informationen können prinzipiell alle auf der Platine bzw. in der Datenverarbeitungseinrichtung vorhandenen Daten sein, die mit der Platine bzw. den Produkten in Verbindung stehen. Vorzugsweise ist der Umfang der zu übermittelnden Daten auf einen mit der Programmierung der Platine bzw. der Datenverarbeitungseinrichtung vorbestimmten Umfang eingeschränkt. Weiterhin kann die Einschränkung der übermittelten Daten über Benutzerberechtigungen erfolgen.

In weiteren Ausführungsformen der Erfindung ist die Datenverarbeitungseinrichtung dazu eingerichtet, bei mechanischem Öffnen der Aufbewahrungsvorrichtung oder beim Verlust der Verbindung zur Aufbewahrungsvorrichtung oder bei Überschreitung vordefinierter Grenzwerte der Messwerte dieser Überschreitung zugeordnete vordefinierte Funktionen auszuführen bzw. zu initiieren.

Diese zugeordneten vordefinierten Funktionen können bspw. eine Alarmmeldung an eine Empfangsstelle am Standort der Aufbewahrungsvorrichtung oder an weiteren Standorten beinhalten. Weiterhin optional beinhalten die vordefinierten Funktionen auch das Unbrauchbarmachen der Produkte. Dies ist optional insbesondere bei einer Konstellation, die den Verlust der Verbindung zur Datenverarbeitungseinheit in Verbindung mit dem Feststellen eines unautorisierten Öffnens möglich. Das Unbrauchbarmachen kann bspw. mittels der Auslösung von Farbbeuteln, die ihren nicht entfernbaren Inhalt an die Produkte abgeben oder durch Signale, die einen Überspannungsschock in elektrischen Produkten auslösen, erfolgen.

Ein weiterer Aspekt der Erfindung betrifft ein erfindungsgemäßes Verfahren zum Betrieb der erfindungsgemäßen Anordnung mindestens aufweisend die folgenden Schritte:
a) Anordnen einer Platine an einem Produkt oder der Umreifung mehrerer Produkte an einem ersten Standort,
b) Zuweisen von Informationen, mindestens zu dem Produkt bzw. den Produkten die in der Umreifung angeordnet sind, in die Platine,
c) Verschließen der Umreifung mit dem Produkt,
d) Zuweisen von Informationen zu dem Produkt oder zu den Produkten, die in der Umreifung angeordnet sind, sowie von Stammdaten und Daten zu einem vorgesehenen Empfänger in die Datenverarbeitungseinrichtung,
e) Übermitteln von Daten zu den Produkten an die optisch erfassbare Identifizierungsmöglichkeit oder bereitstellen der optisch erfassbaren Identifizierungsmöglichkeit durch die Datenverarbeitungseinrichtung,
f) Transport des Produkts bzw. der Produkte zu einem zweiten oder weiteren Standorten,
g) Erfassen von einem oder mehreren Messwerten durch die Platine während des Transports sowie am zweiten oder weiteren Standorten,
h) Übermittlung des einen oder der mehreren Messwerte an die Datenverarbeitungseinrichtung während des Transports sowie an dem zweiten Standort bzw. weiteren Standorten,
i) Auslösen einer elektronischen Meldung an die Datenverarbeitungseinrichtung beim Lösen der Platine von dem Produkt oder von der Umreifung oder bei der Öffnung der Umreifung der Produkte,
j) Auslösen von Benachrichtigungen und elektronischen Informationen durch die Datenverarbeitungseinrichtung.

Die Schritte können, wo technisch möglich, parallel oder nacheinander ausgeführt werden. Bevorzugt ist die angegebene Reihenfolge.

Das erfindungsgemäße Verfahren ermöglicht es vorteilhaft, dass Produkte vom Hersteller oder Versender in der Aufbewahrungsvorrichtung deponiert und an den vorgesehenen Abnehmer versandt werden. Der Hersteller oder Versender benötigt somit keine eigenen Lagerflächen für die genannten Produkte. Der Empfänger lagert die Produkte in der Aufbewahrungsvorrichtung auf Flächen seiner Wahl, bspw. den eigenen Lagerflächen in der Nähe einer Produktionseinrichtung, die die Produkte weiterverarbeitet oder in sonstiger Weise benötigt. Vorteilhaft reduziert dies die mit Lieferverzögerungen verbundenen Risiken. Weiterhin erfolgt eine finanzielle Belastung (Rechnungsstellung) des Empfängers erst mit Entnahme der Produkte aus der Aufbewahrungsvorrichtung und auch nur im Umfang der tatsächlich verwendeten Produkte. Durch die Erfassung der Produktentnahme und die automatisierte Übermittlung dieses Sachverhaltes als Messwert an die Datenverarbeitungseinrichtung kann der Prozess der Rechnungsstellung ebenfalls automatisiert erfolgen. Weiterhin ist vorteilhaft eine Rückgabe von nicht benötigten Produkten vom Empfänger an den Hersteller bzw. Versender leicht möglich, da Anzahl und Zustand der Produkte, die in der Aufbewahrungsvorrichtung verblieben sind, kontinuierlich erfasst und durch Übermittlung der zugehörigen Messwerte an die Datenverarbeitungseinrichtung dokumentiert ist.

In Ausführungsformen der Erfindung sieht das Einprogrammieren von Informationen in die Platine auch das Erzeugen und Einprogrammieren sowie Abspeichern des identifikatorwertes der Platine in diese abgespeichert vor.

In einer Ausführungsform ist der Identifikatorwert der Platine bereits in diese fest einprogrammiert. In diesem Falle wird der Identifikatorwert der Platine mittels der Datenverarbeitungseinrichtung zugeordnet.

Weiterhin umfassen die die in die Datenverarbeitungseinrichtung einprogrammierten Innformationen bspw. Angaben zu Art und Anzahl der in der Aufbewahrungsvorrichtung hinterlegten Produkt. Dazu kommen Stammdaten wie bspw. die Herstellungsangaben (Produzent, Herstellungsdatum etc.) der Produkte und/oder Angaben zum Empfänger. Auch Grenzwerte zu den Produkten, bspw. vorgeschriebene Lagerbedingungen (Temperatur, Feuchte etc.) werden in der Datenverarbeitungseinrichtung und optional auch der Platine, hinterlegt.

Die Platine weist einen oder mehrere Sensoren auf, deren Messwerte an die Platine übermittelt und in dieser verarbeitet werden. Das Verarbeiten umfasst mindestens das Empfangen der Messwerte, die Speicherung der Messwerte sowie deren Übermittlung an die Datenverarbeitungseinrichtung.

Eine Übermittlung der Messwerte an die Datenverarbeitungseinrichtung erfolgt bei Änderungen des Zustandes der Messwerte oder auf Abruf oder zeitbasiert. Auch eine Kombination der die Übermittlung auslösenden Ereignisse ist möglich, bspw. können zeitbasiert nur die Messwerte übermittelt werden, deren Zustand sich geändert hat. Dies spart vorteilhaft Energie.

Zumindest wird am Empfängerstandort der Aufbewahrungsvorrichtung durch Auslesen der Informationen bezüglich des einen oder der mehreren Produkte eine Datenübertragung mindestens der Geopositionsmesswerte, an die Datenverarbeitungseinrichtung ausgelöst. Bei allen Datenübermittlungen von der Platine werden selbstverständlich die Platine identifizierende Angaben (Identifikatorwert der Platine) und optional auch die Uhrzeit (Zeitstempel) übermittelt. Optional sind alle oder einige Datenübertragungen verschlüsselt.

Wenn eine Veränderung der Anzahl (insbesondere eine Abnahme) der Produkte in der Aufbewahrungsvorrichtung als Messwert detektiert wird, erfolgt nach der Übermittlung dieses Messwertes an die Datenverarbeitungseinrichtung optional auch eine Aktualisierung eines Warenwirtschaftssystems.

Die Datenverarbeitungseinrichtung führt vordefinierte Funktionen aus bzw. initiiert diese, falls vordefinierte Ereignisse von der Platine an die Datenverarbeitungsvorrichtung übermittelt werden oder, wenn die Datenverarbeitungsvorrichtung entsprechende vordefinierte Ereignisse erkennt. Derartige Ereignisse können bspw. sein:
- Öffnen der Umreifung bzw. Entfernen der Platine von der Umreifung oder dem Produkt (optional mit Erkennung einer autorisierten oder unautorisierten Handlung), oder
- Verlust der Verbindung zur Aufbewahrungsvorrichtung, oder
- elektronischer Angriff (Hacking) mechanischer Angriff auf die Platine, oder
- Überschreitung vordefinierter Grenzwerte der Messwerte, oder
- unberechtigte Ortsveränderung.

Die Art der vordefinierten Funktionen ist abhängig von der Art des auslösenden Ereignisses. Möglich ist in jedem Falle eine akustische, optische oder elektronische Alarmgebung, die Information zuständiger Personen auf elektronischem Wege, Auch die automatische Information an Strafverfolgungsbehörden ist bei unautorisiertem Öffnen eine Option. Weiterhin kann die Datenverarbeitungseinrichtung, oder aber die Platine selbstständig, eine Anzeige des Alarmzustandes und optional auch der Alarmursache auf dem Display der Platine auslösen. Optional ist auf der Platine auch ein akustischer Alarmgeber angeordnet, der bei entsprechenden Ereignissen (unautorisiertes Öffnen, sonstige Angriffe auf Platine oder Umreifung, kritische Überschreitung von Grenzwerten, unberechtigte Ortsveränderung). Im einfachsten Fall (Öffnen der Umreifung bzw. Entfernung der Platine von Produkt oder Umreifung) erfolgt eine Messwerterfassung und Übermittlung an die Datenverarbeitungseinrichtung, die dann eine Rechnungsstellung - bspw. in Form der elektronischen Übermittlung der Rechnungsdaten an den Endabnehmer- initiiert.

Optional können während des Transports zum zweiten oder zu weiteren Standorten Daten zu den Produkten, Grenzwerte von Messwerten und sonstige im Speicher der Platine hinterlegte Daten durch die Datenverarbeitungseinrichtung geändert werden.

Die erfindungsgemäße Anordnung wird vorzugsweise bei der externalisierten Lagerhaltung von Produkten in der Aufbewahrungsvorrichtung bei einem Kundenunternehmen, Auftragsunternehmen oder sonstigem externen Lagerbetreibereingesetzt.

Das erfindungsgemäße Verfahren findet vorzugsweise beim Betrieb einer externalisierten Lagerhaltung bei einem Kundenunternehmen, Auftragsunternehmen oder sonstigem externen Lagerbetreiber Verwendung.

Die erfindungsgemäße Vorrichtung und das erfindungsgemäße Verfahren führen zu einer Reihe von Vorteilen beim Hersteller bzw. Inverkehrbringer von Produkten:
- Zahlungsziele werden reduziert, da die Produkte vor Ort gelagert werden
- Sofort bei Entnahme erfolgt eine Rechnungsstellung und ggf. elektronisch ausgelöst auch eine Bezahlung durch den Entnehmer,
- Die eigene Lagerfläche kann reduziert werden,
- Lieferketten und Warenströme können optimiert werden, da tagesaktuelle (bei häufigerer Datenübermittlung von den Aufbewahrungsvorrichtungen zur Datenverarbeitungseinrichtung, auch noch zeitnähere) Verbräuche vorliegen,
- Eine Optimierung der Logistik ist aufgrund der Echtzeitmessung der Entnahme auf Artikel(Produkt-)ebene möglich,
- Produktspezifische und abnehmerspezifische Daten können schon am ersten Standort oder während des Transports angepasst werden,
- Da das Produkt bereits am Verkaufsort vorliegt, ergeben sich auf Kundenseite keine Wartezeiten, was zu einer verbesserten Kundenbindung führt,
- Ggf. kann ein Konsignationsagio berechnet werden.

Demgegenüber ergeben sich für den Verwender bzw. Inverkehrbringer der Produkte ebenfalls Vorteile:
- Keine Kapitalbindung durch Lagerhaltung,
- Optimierte Bestellvorgänge, die weitgehend automatisch ablaufen,
- aktuelle Produkt- und sonstige Daten schon beim Erreichen des zweiten Standortes (bspw. Lagerortes),
- Optimierte Lagerhaltung
- Stete Nachfüllung des Lagers - keine Fehlteile,
- Testläufe für neue Sortimente werden erleichtert,
- Reduzierung des Lagerrisikos,
- Ggf. Erträge aus der Vermietung der Lagerflächen.

Die Erfindung soll nachgehend eingehender anhand einiger Ausführungsbeispiele und der zugehörigen Figuren erläutert werden. Die Ausführungsbeispiele sollen dabei die Erfindung 2

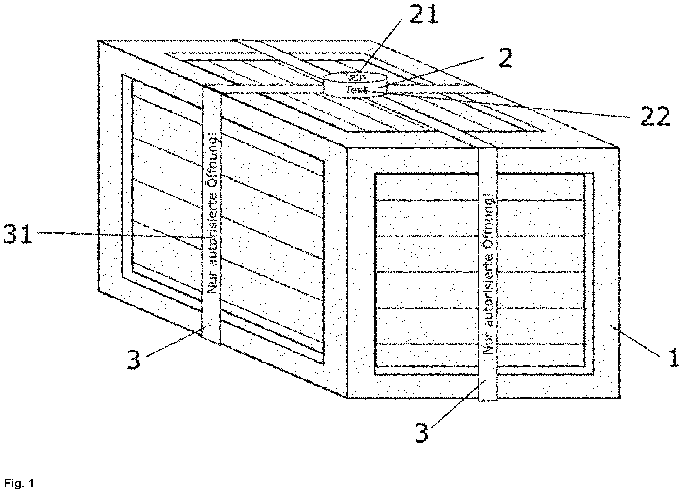

Es zeigen die Figuren in
Fig. 1 zeigt schematisch die Anordnung einer Platine (hier mit Gehäuse 2) an einem verpackten Produkt 1. Das Produkt 1 ist von einer Umreifung 3 eingeschlossen, die eine unautorisierte Entnahme des Produktes 1 verhindert oder zumindest erschwert. Ein dementsprechender Warnaufdruck 31 ist auf der Umreifung angebracht. Das Gehäuse 2 der Platine weist Beschriftungen als optisch erfassbare Identifizierungsmöglichkeiten 21 und 22 (hier nur symbolisch) auf, Die Beschriftungen 21, 22 dienen als optisch erfassbare Identifizierungsmöglichkeiten.

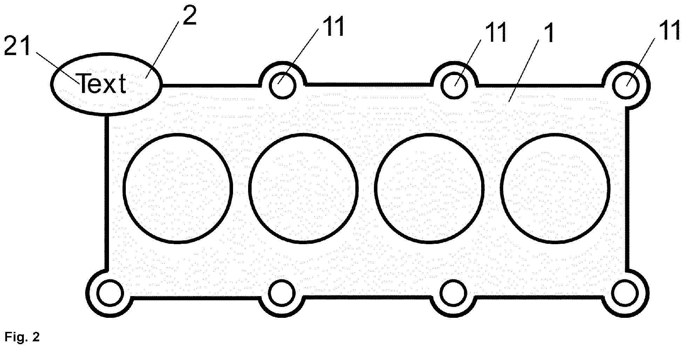

Fig. 2 zeigt schematisch als Produkt (1) einen Zylinderkopf. Dieser weist eine Mehrzahl von Montageöffnungen 11 (Schraubenlöcher) auf. (nur die obere Reihe der Montageöffnungen ist mit Bezugszeichen versehen. Der Zylinderkopf ist in der Darstellung zu einer horizontalen Mittelachse symmetrisch) Die Platine 2 ist in einer der Montageöffnungen 11 befestigt. Sie weist die optisch erfassbare Identifizierungsmöglichkeit 21 auf. Die Montage des Zylinderkopfes kann nur erfolgen, wenn die Platine 2 entfernt wird, wodurch die verdeckte Montageöffnung 11 freigelegt wird. Dieses Entfernen registriert die Platine 2 als Messwert und übermittelt diesen an die Datenverarbeitungseinrichtung.

### Ausführungsbeispiel

In einem ersten einfachen Ausführungsbeispiel (Fig. 1) weist die Anordnung eine Platine 2 mit Gehäuse, sowie eine Umreifung 3 und eine Datenverarbeitungseinrichtung auf.

Die Umreifung 3 ist um einen quaderförmigen Transportbehälter angebracht. Sie besteht aus Umreifungsband, das den Transportbehälter vollständig umläuft. Das Umreifungsband weist eine elektrisch leitfähige Komponente (eingebetteter Draht) auf. Das Umreifungsband besteht aus zwei Teilbändern, die über jeweils eine Seite des Transportbehälters hinwegführen und sich auf der dem Gehäuse der Platine 2 gegenüberliegenden Seite des Transportbehälters kreuzen, ohne dort eine leitfähige Verbindung zwischen den eingebetteten Drähten der Teilbänder herzustellen. Das Gehäuse weist als optisch erfassbare Identifizierungsmöglichkeit 21, 22 einen Aufkleber mit Angaben zum Inhalt des Transportbehälters, Eigentümerangaben sowie einer Warnung gegen unautorisiertes Öffnen auf.

Die Teilbänder sind mit der Platine derart elektrisch leitfähig verbunden, dass die Platine 2 einen elektrischen Strom oder einen Stromimpuls getrennt durch den eingebetteten Draht jedes der Teilbänder senden kann. Zur Einsparung von Energie wird lediglich alle 5 Sekunden ein kurzer Stromimpuls (1ms) durch die eingebetteten Drähte der Umreifungsbänder gesandt. Die Platine 2 weist weiterhin ein mechanisches Schloss auf, dass bei Betätigung auch einen elektronischen Messwert erzeugt. Im Falle eines unautorisierten Öffnens wird der Stromfluss in mindestens einem der Umreifungsbänder unterbrochen. Dieser Messwert wird gemeinsam mit einer fest im Speicher der Platine 2 hinterlegten eindeutigen Platinen-Identifikationsnummer (Identifikatorwert), einem Zeitstempel und den aktuellen GPS-Koordinaten an die Datenverarbeitungseinrichtung übermittelt. Die Datenverarbeitungseinrichtung löst eine Meldung aus, die sowohl an den Eigentümer der Produkte im Transportbehälter als auch an den Inhaber des Lagerortes übermittelt wird.

Ein autorisiertes Öffnen erfolgt, indem das Schloss mit dem passenden Schlüssel geöffnet wird. Durch das autorisierte Öffnen wird die Überwachung des Stromflusses in der Umreifung 3 beendet. Weiterhin wird ein Messwert erzeugt, der die Information über das autorisierte Öffnen beinhaltet. Dieser Messwert wird gemeinsam mit der fest im Speicher der Platine 2 hinterlegten eindeutigen Platinen-Identifikationsnummer (Identifikatorwert), einem Zeitstempel und den aktuellen GPS-Koordinaten durch das Funkmodul (hier ein Mobilfunkmodul) an die Datenverarbeitungseinrichtung übermittelt. Die Datenverarbeitungseinrichtung initiiert daraufhin die hinterlegten Prozesse, wie bspw. eine Datenübermittlung an ein Bestandinformationssystem und/oder eine Rechnungsstellung an den Inhaber des zweiten Standortes (Lagerortes).

In einer Abwandlung des ersten Ausführungsbeispiels erfolgt keine Unterscheidung zwischen autorisiertem und unautorisiertem Öffnen. In beiden Fällen wird ein identischer Messwert generiert und an die Datenverarbeitungsanlage übermittelt. Diese initiiert dann die hinterlegten weiteren Datenverarbeitungs- und -übermittlungsprozesse.

In einem zweiten Ausführungsbeispiel weist die Platine 2 weiterhin einen Mikrocontroller auf.

Die Umreifung 3 ist als kunststoffummantelter Stahldraht ausgeführt und mit dem Öffnungsmechanismus eines gängigen Überseecontainers durch die dafür vorgesehenen Ösen am Öffnungshebel verbunden. Ein Ende des Stahldrahtes der Umreifung 3 ist fest am Gehäuse der Platine 2 befestigt. Das zweite Ende ist im geschlossenen Zustand mittels eines formschlüssigen Rast- und Blockiermechanismus im Gehäuse der Platine 2 verankert. Die Platine 2 ist dazu eingerichtet, durch den Stahldraht in regelmäßgen Abständen (ca. 10 Sekunden) einen Stromimpuls zu senden, um die Unversehrtheit des Stahldrahtes zu prüfen. Das Gehäuse der Platine 2 besteht aus Metall. Die Platine 2 weist ein Funkmodul (Mobilfunk), ein GPS-Modul, einen Mikrocontroller, ein Speichermodul und eine wiederaufladbare Energieversorgung (Akkumulator) auf. Die Energieversorgung (Akkumulator) kann mittels eines gängigen USB-Anschlusses mit Energie aufgeladen werden. Der Anschluss ist von außerhalb des Gehäuses zugänglich und während er nicht genutzt wird, mit einer gegen Wasser dichtenden Gummikappe abgedeckt. Auf dem Gehäuse der Platine 2 sind als optisch erfassbare Identifizierungsmöglichkeit 3 mittels eines Aufklebers der Inhalt des Containers, eine ID-Nummer der Platine 2 sowie Kontaktdaten zum Absender des Containers aufgedruckt. Weiterhin ist ein Strichcode auf dem Aufkleber aufgedruckt, der mindestens dieselben Daten beinhaltet. Auf der Kunststoffummantelung der Umreifung 3 ist eine Warnung vor unautorisierter Öffnung aufgedruckt.

Der Container wird beim Versender mit einer Anzahl von Produkten beladen. Der Inhalt des Containers, also Art und Anzahl der Produkte, werden gemeinsam mit den auch auf dem Aufkleber enthaltenen Angaben und einem Zugangscode über das Funkmodul in den Speicher der Platine 2 einprogrammiert. Weiterhin werden die Koordinaten des Zielortes und eine vorgegebene zulässige Ortsabweichung in die Platine einprogrammiert. Der Container wird einem Transportunternehmen übergeben, dass den Container bis zum Zielort transportiert. Die Platine 2 erkennt das Erreichen des Zielortes an Hand der Koordinaten. Während des Transportes können die Koordinaten des Zielortes angepasst werden. Dies kann bspw. notwendig sein, wenn die Produkte zwischenzeitlich weiterveräußert wurden oder wenn der Abnehmer noch während des Transportes einen anderen Lagerort bestimmt hat Über das Funkmodul wird das Erreichen des Zielortes an die Datenverarbeitungseinrichtung gemeldet. Die Datenverarbeitungseinrichtung aktualisiert die Daten eines Warerwirtschaftssystems mit dem aktuellen Lagerort der Produkte. Der Kunde übermittelt am Lagerort des Containers mittels des Mobilfunkmoduls einen Zugangscode an die Platine2. Diese vergleicht (mittels des Mikrocontrollers) den übermittelten Zugangscode mit dem im Speichermodul hinterlegten. Bei Übereinstimmung wird die Verriegelung des Blockiermechanismus freigegeben, so dass die Umreifung 3 gelöst werden kann und der Container zugänglich ist. Gleichzeitig übermittelt das Mobilfunkmodul den Messwert der autorisierten Entriegelung der Umreifung 3 an die Datenverarbeitungseinrichtung. Diese aktualisiert die Daten der Produkte als entnommen im Warenwirtschaftssystem und initiiert die Rechnungsstellung an den Kunden. Die Verfahrensweise bei unautorisiertem Öffnen (bspw. mittels Durchtrennung des Stahldrahtes) wird analog zu Ausführungsbeispiel 1 von der Platine 2 als Messwert detektiert und an die Datenverarbeitungseirichtung übermittelt.

In einem dritten Ausführungsbeispiel ist die Anordnung analog zu Ausführungsbeispiel 1 aufgebaut. Weiterhin weist die Platine jedoch einen Mikrocontroller sowie einen Temperatursensor auf. Auch die Umreifung 3 ist analog zu Ausführungsbeispiel 1 ausgeführt. Die enthaltenen Produkte sind jedoch gegen erhöhte Lagertemperaturen empfindlich. Der Temperatursensor bestimmt in regelmäßigen Abständen (stündlich) die Umgebungstemperatur. Wenn die Temperaturwerte unterhalb einer vorprogrammierten Grenztemperatur liegen, werden diese lediglich gespeichert und einmal täglich zeitgesteuert an die Datenverarbeitungseinrichtung per Funkmodul übermittelt. Die Grenztemperatur liegt unterhalb der zulässigen höchsten Lagertemperatur, so dass rechtzeitig eingegriffen werden könnte. Sollte die Grenztemperatur erreicht werden, wird eine sofortige Datenübermittlung an die Datenverarbeitungseinrichtung ausgeführt. Diese löst einen Alarm aus, der sowohl an den Eigentümer der Produkte als auch den Zuständigen am Lagerort weitergeleitet wird. Die Verfahrensweisen beim Öffnen entsprechen denen in den vorhergehenden Ausführungsbeispielen.

In einem vierten Ausführungsbeispiel (Fig. 2) ist das Produkt ein Zylinderkopf. Der Zylinderkopf weist eine Mehrzahl an Schraubenlöchern (Montageöffnungen 11) auf. Die Platine 2 ist in einer der Montageöffnungen 11 befestigt. Eine gesonderte Umreifung des Produktes 1 ist nicht vorgesehen. Die Platine weist die optisch erfassbare Identifizierungsmöglichkeit 21 "Text" auf. Für eine Montage des Zylinderkopfes ist es notwendig, die Platine 2 zu entfernen. Durch das Entfernen wird die verdeckte Montageöffnung 11 freigelegt. Dieses Entfernen registriert die Platine 2 als Messwert und übermittelt diesen an die Datenverarbeitungseinrichtung. Der weitere Ablauf ist identisch zu den vorhergehenden Ausführungsbeispielen.

### Bezugszeichen

- 1: Produkt
- 11: Montageöffnungen am Produkt
- 2: Platine mit Gehäuse
- 21, 22: optisch erfassbare Identifizierungsmöglichkeit
- 3: Umreifung
- 31: Warnhinweis auf der Umreifung

## Patentansprüche

1. Anordnung zur Verfolgung und Überwachung von einem oder mehreren Produkten, mindestens aufweisend:
- eine Datenverarbeitungseinrichtung mit einer Sende-/Empfangsvorrichtung für Messwerte und weitere elektronische Informationen,
- mindestens einer Platine, mindestens aufweisend ein Funkmodul, Geopositions-Modul, Speichermodul und Energieversorgung,
- mindestens eine optisch erfassbare Identifizierungsmöglichkeit,
wobei
- die Platine dazu eingerichtet ist,
o den aktuellen Standort der Produkte mittels des Geopositions-Moduls als Messwert festzustellen,
o das mechanische Entfernen der Platine von einem Produkt oder von einer Umreifung eines oder mehrerer Produkte oder aber die Öffnung der Umreifung als Messwert zu detektieren,
∘ einen oder mehrere Messwerte zu speichern,
∘ einen oder mehrere Messwerte an die Datenverarbeitungseinrichtung zu übermitteln,
∘ gemeinsam mit den Messwerten mindestens einen Identifikatorwert zu übermitteln, der die Platine eindeutig kennzeichnet,
∘ Daten zu dem Produkt oder den Produkten zu speichern,
∘ Änderungen der Daten zu dem Produkt bzw. den Produkten vor der Anordnung der Platine an dem Produkt bzw. der Umreifung der Produkte an einem ersten Standort und während des Transportes des Produkts bzw. der Produkte zu einem zweiten oder weiteren Standorten, sowie an dem zweiten bzw. weiteren Standorten zu empfangen und abzuspeichern,
- die Datenverarbeitungseinrichtung dazu eingerichtet ist, vor und/oder während und/oder nach der Anordnung der Platine an den Produkten bzw. der Umreifung der Produkte an dem ersten Standort
∘ Daten zu den Produkten an die Platine zu übermitteln,
∘ Daten zu den Produkten an die optisch erfassbare Identifizierungsmöglichkeit zu übermitteln oder die optische Identifizierungsmöglichkeit mit den Daten zu den Produkten bereitzustellen,
∘ während des Transportes vom ersten Standort zu dem zweiten oder weiteren Standorten sowie an diesen weiteren Standorten Änderungen der Daten zu den Produkten an die Platine zu übermitteln,
∘ die Messwerte der Platine zu empfangen und zu verarbeiten,
∘ aufgrund der Messwerte beim Entfernen der Platine von dem Produkt bzw. der Umreifung oder der Öffnung bzw. Zerstörung der Umreifung oder aufgrund von Messwerten der Platine Informationen an den ersten und/oder den zweiten und/oder weiteren Standorten und/oder an die Platine zu senden.

2. Anordnung nach Anspruch 1, **dadurch gekennzeichnet, dass** die Platine in einem Gehäuse angeordnet ist.

3. Anordnung nach einem der vorhergehenden Ansprüche, **dadurch gekennzeichnet**, das Gehäuse ein mit der Platine verbundenes Anzeige- und Bedienfeld, einen Kartenleser, einen USB-Anschluss oder eine sonstige Schnittstelle aufweist, über die Informationen von der Platine abgefragt bzw. in diese eingegeben werden können.

4. Anordnung nach einem der vorhergehenden Ansprüche, **dadurch gekennzeichnet, dass** die Platine mindestens einen Sensor aufweist, der Messwerte erfasst und die Platine die Messwerte bei Änderungen des Zustandes der Messwerte oder auf Abruf oder zeitbasiert an die Datenverarbeitungseinrichtung übermittelt.

5. Anordnung nach Anspruch 4, **dadurch gekennzeichnet, dass** der mindestens eine Sensor mindestens einen der folgenden Werte: Temperatur, Feuchtigkeit und Beschleunigung, erfasst.

6. Anordnung nach Anspruch 4 oder 5, **dadurch gekennzeichnet, dass** die Datenverarbeitungseinrichtung Änderungen von Grenzwerten der durch Sensoren und/oder das Geopositionsmodul und/oder einen Zeitgeber der Platine bereitgestellten Messwerte an die Platine übermittelt.

7. Anordnung nach einem der vorhergehenden Ansprüche, **dadurch gekennzeichnet, dass** das Funkmodul ein W-LAN-Modul, ein Mobilfunkmodul, ein Bluetoothmodul oder ein ZigBee-Modul umfasst, und/oder ein RFID-Modul aufweist.

8. Anordnung nach einem der vorhergehenden Ansprüche, **dadurch gekennzeichnet, dass** das Funkmodul dazu eingerichtet ist, maschinenlesbare Informationen zu dem einen Produkt oder zu den mehreren Produkten in der Umreifung zu übermitteln und/oder die Datenverarbeitungseinrichtung dazu eingerichtet ist, beim Verlust der Verbindung zur Platine diesem Ereignis zugeordnete vordefinierte Funktionen auszuführen bzw. zu initiieren und/oder eine Alarmmeldung an eine Empfangsstelle am Standort der Platine oder an weitere Stadorde zu senden.

9. Anordnung nach einem der vorhergehenden Ansprüche, **dadurch gekennzeichnet, dass** die Umreifung mindestens Informationen über den Hersteller des einen oder der mehreren Produkte, Warnhinweise bezüglich des einen oder mehreren Produkte und/oder Warnhinweise bezüglich der Zerstörung der Umreifung aufweist.

10. Anordnung nach einem der vorhergehenden Ansprüche, **dadurch gekennzeichnet, dass** die Produkte in der Umreifung funkabfragbare Tags (RFID-Tags) aufweisen, auf deren Grundlage die Platine mindestens die Anzahl der in der Umreifung vorhandenen Produkte als Messwert erfassen kann.

11. Anordnung nach einem der vorhergehenden Ansprüche, **dadurch gekennzeichnet, dass** die Datenverarbeitungseinrichtung weiterhin dazu eingerichtet ist, Informationen zu dem Produkt bzw. den Produkten von der Platine abzurufen und an ein Display oder eine sonstige tragbare Datenverarbeitungseinrichtung zu übermitteln.

12. Anordnung nach einem der vorhergehenden Ansprüche, **dadurch gekennzeichnet, dass** die Platine dazu eingerichtet ist, die Umreifung bei Empfang eines vordefinierten Signals von der Datenverarbeitungseinrichtung oder von einem Display oder einer sonstigen Datenverarbeitungseinrichtung oder beim Vorlegen eines sonstigen korrekten elektronischen oder mechanischen Schlüssels die Umreifung zu lösen oder die Platine von der Umreifung oder dem Produkt zu trennen.

13. Verfahren zum Betrieb einer Anordnung nach einem der vorhergehenden Ansprüche, aufweisend die Schritte
a. Anordnen einer Platine an einem Produkt oder der Umreifung mehrerer Produkte an einem ersten Standort,
b. Zuweisen von Informationen, mindestens zu dem Produkt bzw. den Produkten die in der Umreifung angeordnet sind, in die Platine,
c. Verschließen der Umreifung mit dem Produkt,
d. Zuweisen von Informationen zu dem Produkt oder zu den Produkten, die in der Umreifung angeordnet sind, sowie von Stammdaten und Daten zu einem vorgesehenen Empfänger in die Datenverarbeitungseinrichtung,
e. Übermitteln von Daten zu den Produkten an die optisch erfassbare Identifizierungsmöglichkeit oder bereitstellen der optisch erfassbaren Identifizierungsmöglichkeit durch die Datenverarbeitungseinrichtung,
f. Transport des Produkts bzw. der Produkte zu einem zweiten oder weiteren Standorten,
g. Erfassen von einem oder mehreren Messwerten durch die Platine während des Transports sowie am zweiten oder weiteren Standorten,
h. Übermittlung des einen oder der mehreren Messwerte an die Datenverarbeitungseinrichtung während des Transports sowie an dem zweiten Standort bzw. weiteren Standorten,
i. Auslösen einer elektronischen Meldung an die Datenverarbeitungseinrichtung beim Lösen der Platine von dem Produkt oder von der Umreifung oder bei der Öffnung der Umreifung der Produkte,
j. Auslösen von Benachrichtigungen und elektronischen Informationen durch die Datenverarbeitungseinrichtung.

14. Verfahren nach Anspruch 13, **dadurch gekennzeichnet, dass** in Schritt b. zusätzlich der Identifikatorwert der Platine erzeugt und in dieser abgespeichert wird, oder dass die Platine über einen unveränderlich einprogrammierten Identifikatorwert verfügt.

15. Verfahren nach einem der Ansprüche 13 oder 14, **dadurch gekennzeichnet, dass** bei Änderungen des Zustandes der Messwerte oder auf Abruf oder zeitbasiert eine Übermittlung der Messwerte an die Datenverarbeitungseinrichtung erfolgt und dass in Schritt g. am Empfängerstandort durch Auslesen der Informationen bezüglich des einen oder der mehreren Produkte eine Datenübertragung mindestens der Geopositionsmesswerte an die Datenverarbeitungseinrichtung ausgelöst wird.

16. Verfahren nach einem der Ansprüche 13 bis 15, **dadurch gekennzeichnet, dass** während des Transports zum zweiten oder zu weiteren Standorten Daten zu den Produkten, Grenzwerte von Messwerten und sonstige im Speicher der Platine hinterlegte Daten durch die Datenverarbeitungseinrichtung geändert werden.

17. Verfahren nach einem der Ansprüche 10 bis 12, **dadurch gekennzeichnet, dass** in Schritt i. weiterhin eine Aktualisierung eines Warenwirtschaftssystems erfolgt.

18. Verfahren nach einem der Ansprüche 10 bis 13, **dadurch gekennzeichnet, dass** ein Ausführen bzw. Initiieren von vordefinierten Funktionen durch die Datenverarbeitungseinrichtung erfolgt, bei
∘ Entfernen der Platine von der Umreifung oder dem Produkt oder Öffnen der Umreifung, oder
∘ Verlust der Verbindung zur Platine, oder
∘ elektronischem oder mechanischem Angriff auf die Platine, oder
∘ Überschreitung vordefinierter Grenzwerte der Messwerte
∘ unberechtigter Ortsveränderung der Platine
und dass optional eine Anzeige des Ereignisses auf dem Anzeige- und Bedienfeld und/oder eine akustische Alarmgebung erfolgen.

19. Verwendung einer Anordnung nach einem der Ansprüche 1 bis 12 bei der externalisierten Lagerhaltung von Produkten an einem zweiten oder weiteren Standorten, bei dem es sich um bei ein Kundenunternehmen, Auftragsunternehmen oder sonstigen externen Lagerbetreiber handelt.
